# FASCICULE DE BREVET EUROPEEN

(11) **EP 2 316 663 B1**
(45) Date de publication et mention de la délivrance du brevet: **23.05.2012**
(21) Numéro de dépôt: 10187901.3
(22) Date de dépôt: 18.10.2010
(51) Int. Cl.: B60B 21/12, B60B 25/22, B60C 5/16

(54) **Jante de roue à rayons, ensemble monté l'incorporant et son procédé d'assemblage**
Radfelge mit Speichen, damit ausgestattete montierte Einheit und Zusammenbauverfahren
Rim of a spoke wheel, mounted assembly including said rim and method for assembling the same

(30) Priorité: 27.10.2009 FR 0905154
(43) Date de publication de la demande: 04.05.2011
(73) Titulaire: Hutchinson, 75008 Paris (FR)
(72) Inventeur: Gangloff, Norbert, 45270, LADON (FR); Bruandet, Philippe, 45700, PANNES (FR)
(74) Mandataire: Bolinches, Michel Jean-Marie

(56) Documents cités:
- DE-A1- 3 727 051
- DE-A1- 19 542 982
- GB-A- 846 016
- US-A- 4 108 232

## Description

La présente invention concerne une jante de roue à rayons pour véhicule à roues, un ensemble monté incorporant cette jante pour un tel véhicule et un procédé d'assemblage de cet ensemble monté. L'invention s'applique en particulier aux ensembles montés pour bicyclettes.

De manière connue, les ensembles montés pour bicyclettes peuvent incorporer des moyens de mise sous pression de leur espace interne, que ce soit via des chambres à air prévues entre le pneumatique et la jante de roue (un tel ensemble monté est alors appelé « tubetype ») ou bien sans chambre à air via le montage étanche du pneumatique contre les rebords de jante (ensemble monté « tubeless »).

Le document US-A-4 108 232 présente un tel ensemble monté sans chambre à air dans lequel la jante de roue à rayons, de type à creux de jante en U évasé, est recouverte d'un ruban annulaire souple et étanche au gaz de gonflage qui reçoit de manière étanche un pneumatique et qui incorpore une valve de gonflage montée à travers ce creux de jante. Ce ruban s'étend axialement d'un rebord de jante à l'autre, il présente des nervures axiales dans une portion centrale épousant le creux de jante, et deux bourrelets circonférentiels en ses bords latéraux qui surmontent respectivement les rebords de jante.

Un inconvénient majeur de ces rubans annulaires connus qui recouvrent des jantes de roues à rayons réside dans le fait qu'ils ne sont utilisables que pour une unique largeur axiale de jante, ce qui impose de disposer d'autant de rubans différents qu'il y a de jantes à équiper, définies par différentes largeurs de fond de jante et/ou par différentes géométries de rebords de jante.

Un autre inconvénient de ces rubans connus pour jantes à rayons réside dans leur mise en place au contact du fond de jante qui peut être malaisée, ainsi que dans leur remplacement qui peut être requis suite à une crevaison.

Un but de la présente invention est de proposer une jante de roue à rayons pour véhicule à roues, en particulier pour une bicyclette, qui permette de remédier à ces inconvénients, la jante présentant deux rebords de jante et un fond de jante recouvert d'un ruban annulaire souple et étanche au gaz de gonflage qui est destiné à recevoir un pneumatique et qui est équipé d'une valve de gonflage de ce pneumatique, ce ruban présentant une portion centrale épousant ce fond de jante et deux portions latérales dépassant axialement de ces rebords de jante.

A cet effet, une jante selon l'invention est telle que lesdites portions latérales sont aptes à être amputées d'une partie de leur largeur axiale par détachement de deux tronçons périphériques respectifs de ces portions latérales, de telle sorte que ce ruban s'étende de l'un desdits rebords à l'autre suite à ce détachement.

On notera que ces tronçons périphériques des portions latérales du ruban, qui dépassent axialement de part et d'autre des rebords de jante en étant de préférence rabattus radialement vers l'intérieur, permettent d'utiliser un seul modèle de ruban selon l'invention (i.e. de largeur fixée) pour recouvrir une pluralité de jantes de diverses largeurs axiales mesurées entre les deux rebords de chaque jante.

Selon une autre caractéristique de l'invention, lesdites portions latérales peuvent présenter chacune des lignes circonférentielles de pré-découpe qui sont parallèles et espacées dans la direction axiale, et qui sont aptes à permettre le détachement manuel desdits tronçons périphériques en des emplacements axiaux déterminés en fonction de la distance axiale séparant lesdits rebords de jante entre eux.

Avantageusement, ces lignes de pré-découpe peuvent comprendre une multitude de stries continues dans la direction circonférentielle.

Selon une autre caractéristique de l'invention, lesdites portions latérales peuvent présenter chacune une épaisseur radiale inférieure à celle de ladite portion centrale, de sorte à éviter le « poinçonnage » du ruban dû à la pression du gaz de gonflage en cette portion centrale et à faciliter le détachement de chaque tronçon périphérique en chaque portion latérale.

Avantageusement, lesdites portions latérales peuvent être reliées à ladite portion centrale par deux bourrelets circonférentiels contre lesquels sont destinés à être montés deux talons du pneumatique. On notera que ces bourrelets sont optionnels, en sorte qu'un ruban selon l'invention pourrait en être totalement dépourvu.

Selon une autre caractéristique de l'invention, ledit ruban peut être constitué d'un matériau élastomère, de préférence à base d'au moins un vulcanisat thermoplastique (TPV).

Selon une autre caractéristique de l'invention, ladite valve peut être montée solidaire dudit ruban en étant par exemple soudée, collée ou emmanchée radialement à travers ce ruban dans ladite portion centrale.

Selon un mode de réalisation de l'invention, chacun desdits rebords de jante peut présenter une extrémité radialement externe qui est recourbée en direction de l'autre rebord et, avant détachement de chaque tronçon périphérique, chaque portion latérale peut recouvrir ladite extrémité recourbée à la fois sur les faces interne et externe de cette extrémité.

Un ensemble monté selon l'invention pour véhicule à roues, en particulier pour une bicyclette, présente une jante de roue destinée à être traversée par des rayons de la roue telle que définie ci-dessus et un pneumatique monté sur cette jante.

Avantageusement, cet ensemble monté peut être initialement dépourvu de chambre à air, et son pneumatique comporte deux talons respectivement montés sur lesdites portions latérales dudit ruban.

On notera que ce ruban selon l'invention peut avantageusement rester en place après démontage du pneumatique suite à une crevaison. En d'autres termes, ce ruban n'a pas forcément à être remplacé, ni repositionné sur le fond de jante, et il peut donc servir à nouveau après un changement de pneumatique.

On notera également que ce ruban permet d'assurer une étanchéité telle avec le pneumatique que l'on n'a pas de perte supplémentaire de pression de gonflage lorsque le pneumatique est déformé à basse pression.

On notera en outre que lors d'une crevaison, il suffit de retirer la valve de gonflage du ruban qui est montée amovible sur ce dernier, et d'insérer une chambre à air entre ce ruban et le pneumatique pour assurer un roulage dans des conditions satisfaisantes.

Un procédé d'assemblage selon l'invention de cet ensemble monté comprend les étapes suivantes :
a) on applique le ruban autour de et en contact étroit avec la jante de manière qu'il épouse le profil axial de la jante, de l'un desdits rebords de jante à l'autre en dépassant axialement des rebords de jante via lesdits tronçons périphériques rabattus radialement vers l'intérieur de ces rebords,
b) on serre la valve montée à travers ce ruban sur la jante,
c) on monte les talons du pneumatique sur le ruban, de préférence après avoir lubrifié la face externe de ce ruban et/ou ces talons,
d) on gonfle le pneumatique via la valve, puis
e) on détache ces tronçons périphériques desdites portions latérales respectives les incorporant en deux emplacements axiaux qui sont fonction de la largeur axiale de la jante, de préférence en deux lignes circonférentielles de pré-découpe respectivement formées en ces emplacements axiaux.

Selon une autre caractéristique de l'invention, ce procédé d'assemblage comprend en outre une étape de positionnement de la valve dans l'orifice du fond de jante qui est destiné à la recevoir, cette étape de positionnement étant mise en oeuvre avant l'étape a) si la valve est préalablement montée solidaire du ruban, ou bien après l'étape a) et avant l'étape b) dans le cas contraire en montant cette valve à travers ladite portion centrale du ruban et à travers cet orifice.

On notera que la mise en place du ruban selon l'invention est aisée pour l'opérateur, quelle que soit la largeur axiale du fond de jante, via le détachement de ces tronçons périphériques du ruban.

D'autres caractéristiques, avantages et détails de la présente invention ressortiront à la lecture de la description suivante d'un exemple de réalisation de l'invention, donné à titre illustratif et non limitatif, ladite description étant réalisée en référence avec les dessins joints, parmi lesquels :
la figure 1 est une demi-vue en section axiale d'un exemple de jante de roue utilisable pour recevoir un ruban annulaire selon l'invention,
la figure 2 est une vue partielle schématique et de dessus de ce ruban selon un exemple préférentiel de l'invention,
la figure 3 est une demi-vue en section axiale de la jante de la figure 1 sur laquelle on a appliqué un ruban selon l'invention, avant montage du pneumatique sur ce ruban,
la figure 4 est une demi-vue en section axiale de la jante pourvue du ruban selon la figure 3, après montage du pneumatique sur ce ruban, et
la figure 5 est une demi-vue en section axiale de l'ensemble monté de la figure 4, après détachement des deux portions périphériques du ruban.

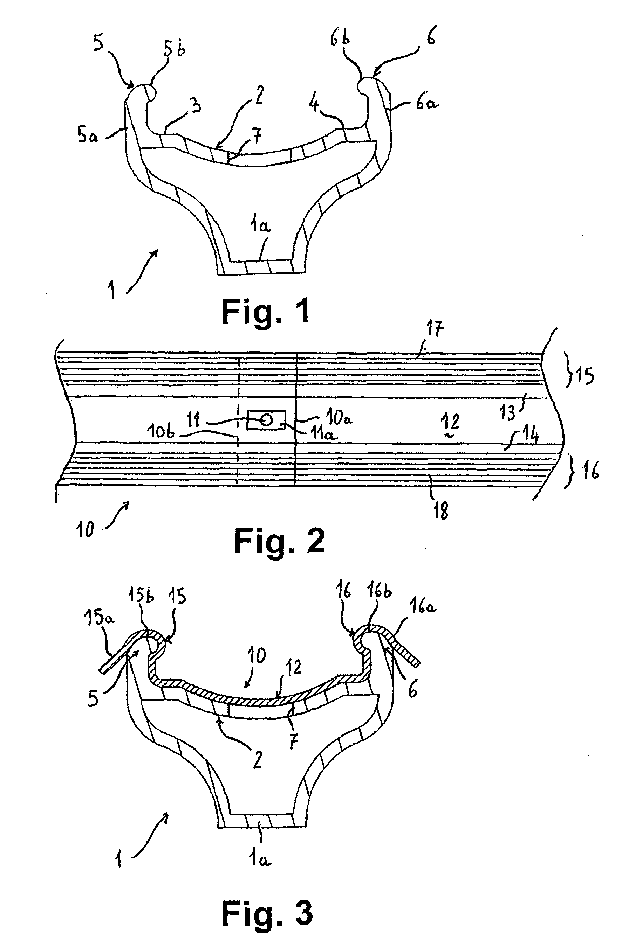

La jante de roue 1 illustrée à la figure 1 est par exemple de type pour bicyclette, et elle est destinée à être traversée par des rayons via des orifices (non visibles dans ce plan de coupe) ménagés dans une partie radialement interne 1 a de la jante 1 qui est surmontée par le fond de jante 2 destiné à recevoir un ruban 10 selon l'invention. Ce fond de jante 2 présente dans cet exemple une face radialement externe légèrement concave qui se prolonge axialement par deux portées plates 3 et 4 respectivement adjacentes aux deux rebords de jante 5 et 6. Chaque rebord 5, 6 présente une portion radiale 5a, 6a s'étendant perpendiculairement à la portée 3, 4 adjacente, qui se termine par un sommet 5b, 6b radialement externe recourbé en direction de l'autre rebord 6, 5. On a également représenté aux figures 1 à 5 un trou 7 de tête de rayon (par exemple de forme circulaire) que présente le fond de jante 2 et qui sert, via l'insertion d'un outil adapté, au montage et au réglage en tension de chaque rayon.

On notera toutefois qu'une jante selon l'invention pourrait présenter des géométries de fond de jante et/ou de rebords différentes, pourvu qu'elles soient adaptées à une roue à rayons comme par exemple une roue de bicyclette.

Le ruban 10 selon l'invention qui est illustré à la figure 2 est à base d'un matériau souple et étanche au gaz de gonflage, comme par exemple un vulcanisat thermoplastique (TPV) tel que du « Vegaprene », à titre non limitatif. Ce ruban 10 est pré-équipé d'une valve de gonflage 11 du pneumatique 20 à monter sur la jante 1, cette valve 11 (visible à la figure 2) étant par exemple emmanchée ou soudée à travers le ruban 10 perpendiculairement à ce dernier. Dans l'exemple de la figure 2, un bloc support de valve 11 a (par exemple formé d'un pavé en caoutchouc) entoure l'extrémité de cette valve 11 destinée à déboucher à l'intérieur de l'espace interne du pneumatique 20, ce bloc 11a étant monté en butée contre la face radialement externe du ruban 10.

Ce ruban 10 est apte à prendre une forme annulaire fermée au contact de la jante 1, par une solidarisation de ses deux extrémités 10a et 10b l'une avec autre pouvant être réalisée par un recouvrement mutuel de ces extrémités 10a et 10b, comme visible à la figure 2.

Le ruban 10 comprend sur toute sa longueur :
- une portion centrale 12 dans la direction transversale du ruban 10, qui est destinée à être appliquée sur le fond de jante 2 et qui présente une épaisseur maximale en étant délimitée transversalement par deux bourrelets optionnels 13 et 14 contre lesquels sont destinés à être montés les deux talons 21 et 22 du pneumatique 20, la valve 11 étant montée à travers cette portion centrale 12 et avantageusement en la zone de recouvrement des extrémités 10a et 10b du ruban 10 de sorte à les fixer l'une à l'autre, et
- deux portions latérales 15 et 16 d'épaisseur minimale qui sont respectivement adjacentes à ces bourrelets 13 et 14 et qui présentent chacune une multitude de lignes circonférentielles de pré-découpe 17 et 18 parallèles et espacées dans la direction transversale, telles que des stries continues sur la longueur du ruban 10.

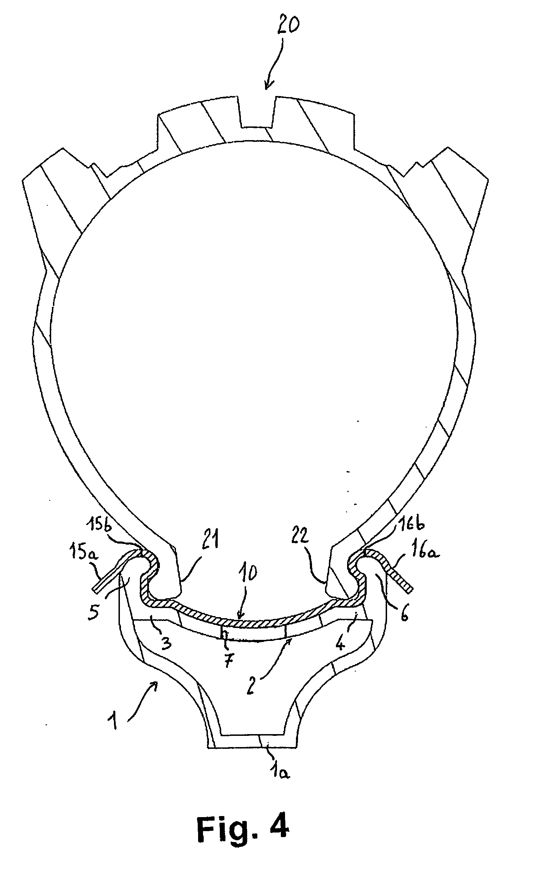

Selon l'invention, ces lignes de pré-découpe 17 et 18 sont conçues pour permettre le découpage manuel de tronçons périphériques 15a et 16a respectifs de ces portions latérales 15 et 16 (ces tronçons sont visibles aux figures 3 et 4), en des emplacements axiaux précisément déterminés en fonction de la largeur axiale séparant les rebords de jante 5 et 6. A cet effet, la distance transversale séparant deux lignes 17 et 18 consécutives est avantageusement prévue relativement faible, pour permettre un ajustement des bords latéraux 15b et 16b du ruban 10 précisément sur les rebords de jante correspondants 5 et 6 après ce découpage.

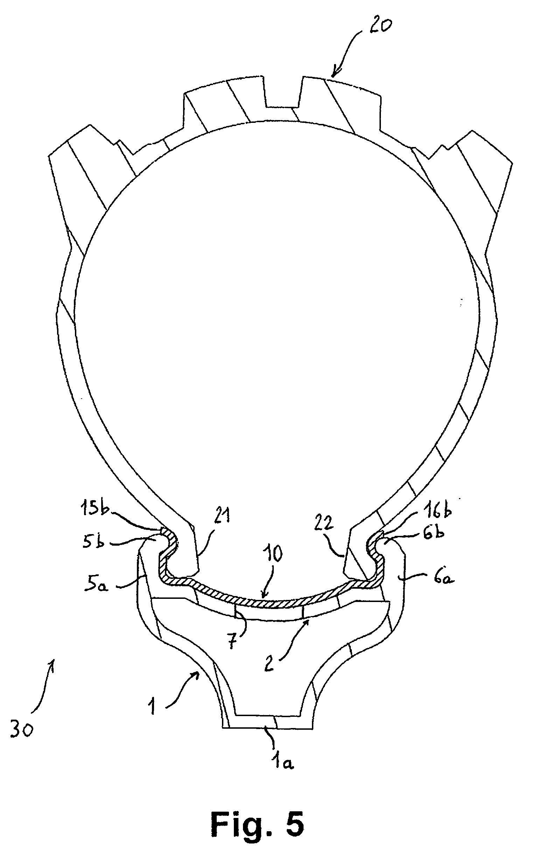

Comme illustré aux figures 3 à 5, on peut procéder comme suit pour l'insertion du ruban 10 dans l'ensemble monté 30 obtenu à la figure 5.

On commence par positionner la valve 11 qui est solidaire du ruban 10 dans un orifice du fond de jante 2 (cet orifice n'est pas visible aux figures 3 à 5) destiné à la recevoir, puis on applique le ruban 10 autour de la jante 10. Du fait de la mise en tension circonférentielle du ruban 10, ce dernier épouse alors parfaitement le profil axial de la jante 1. Comme visible à la figure 3, le ruban 10 s'étend alors d'un rebord de jante 5 à l'autre 6 en dépassant axialement de part et d'autre de ces rebords 5 et 6. On serre ensuite la valve 11 sur la jante 1 en y vissant son écrou.

Puis on procède au centrage axial du ruban 10 sur le fond de jante 2, de sorte que ce ruban dépasse latéralement des rebords 5 et 6 sensiblement d'une même distance latérale qui correspond à la largeur axiale des tronçons périphériques 15a et 16a, que l'on rabat radialement vers l'intérieur (i.e. sensiblement au contact des faces externes respectives des rebords 5 et 6) en prévision de leur découpage.

On lubrifie ensuite la face radialement externe du ruban 10 et les talons 21 et 22 du pneumatique 20 qu'il est destiné à recevoir.

Comme illustré à la figure 4, on monte ensuite ces talons 21 et 22 sur le ruban 10 radialement en regard des portées plates 3 et 4 de la jante 1, puis on gonfle via la valve 11 l'espace interne du pneumatique 20 à la pression souhaitée.

Dans la dernière étape d'assemblage de cet ensemble monté 30 dont le résultat est illustré à la figure 5, on découpe les deux portions périphériques 15a et 16a en deux emplacements axiaux déterminés par l'intermédiaire des lignes de prédécoupe 17 et 18, ce qui a pour effet de définir du fait de la largeur axiale de la jante 10 utilisée les bords latéraux 15b et 16b du ruban 10. On voit que ces derniers épousent ainsi le contour des extrémités recourbées 5b et 6b respectives des rebords de jante 5 et 6 mais sans s'étendre sur la face externe des portions radiales 5a et 6a de ces rebords 5 et 6 pour ne pas entraver le fonctionnement des freins du véhicule. Dans l'exemple de la figure 5, chaque bord latéral 15b, 16b du ruban ainsi découpé s'étend sensiblement dans le prolongement radial de la face interne de la portion radiale 5a, 6a du rebord 5, 6 correspondant.

## Revendications

1. Jante de roue (1) à rayons pour véhicule à roues, en particulier pour une bicyclette, la jante présentant deux rebords de jante (5 et 6) et un fond de jante (2) recouvert d'un ruban annulaire (10) souple et étanche au gaz de gonflage qui est destiné à recevoir un pneumatique (20) et qui est équipé d'une valve de gonflage (11) de ce pneumatique, ce ruban présentant une portion centrale (12) épousant ce fond de jante et deux portions latérales (15 et 16) dépassant axialement de ces rebords de jante, **caractérisée en ce que** lesdites portions latérales sont aptes à être amputées d'une partie de leur largeur axiale par détachement de deux tronçons périphériques (15a et 16a) respectifs de ces portions latérales, de telle sorte que ce ruban s'étende de l'un desdits rebords à l'autre suite à ce détachement.

2. Jante de roue (1) selon la revendication 1, **caractérisée en ce que** lesdites portions latérales (15 et 16) présentent chacune des lignes circonférentielles de pré-découpe (17 et 18) qui sont parallèles et espacées dans la direction axiale, et qui sont aptes à permettre le détachement manuel desdits tronçons périphériques (15a et 16a) en des emplacements axiaux déterminés en fonction de la distance axiale séparant lesdits rebords de jante (5 et 6) entre eux.

3. Jante de roue (1) selon la revendication 2, **caractérisée en ce que** lesdites lignes de pré-découpe (17 et 18) comprennent une multitude de stries continues dans la direction circonférentielle.

4. Jante de roue (1) selon une des revendications précédentes, **caractérisée en ce que** lesdites portions latérales (15 et 16) présentent chacune une épaisseur radiale inférieure à celle de ladite portion centrale (12), de sorte à faciliter le détachement de chaque tronçon périphérique (15a, 16a).

5. Jante de roue (1) selon une des revendications précédentes, **caractérisée en ce que** lesdites portions latérales (15 et 16) sont reliées à ladite portion centrale (12) par deux bourrelets circonférentiels (13 et 14) contre lesquels sont destinés à être montés deux talons (21 et 22) du pneumatique (20).

6. Jante de roue (1) selon une des revendications précédentes, **caractérisée en ce que** ledit ruban (10) est constitué d'un matériau élastomère, de préférence à base d'au moins un vulcanisat thermoplastique (TPV).

7. Jante de roue (1) selon une des revendications précédentes, **caractérisée en ce que** ladite valve (11) est montée solidaire dudit ruban (10) en étant par exemple soudée, collée ou emmanchée radialement à travers ce ruban dans ladite portion centrale (12).

8. Jante de roue (1) selon une des revendications précédentes, **caractérisée en ce que** chacun desdits rebords de jante (5, 6) présente une extrémité radialement externe (5b, 6b) qui est recourbée en direction de l'autre rebord (6, 5) et **en ce que**, avant détachement de chaque tronçon périphérique (15a, 16a), chaque portion latérale (15, 16) recouvre ladite extrémité recourbée (5b, 6b) à la fois sur les faces interne et externe de cette extrémité.

9. Ensemble monté (30) pour véhicule à roues, en particulier pour une bicyclette, présentant une jante de roue (1) destinée à être traversée par des rayons de la roue et un pneumatique (20) monté sur cette jante, **caractérisé en ce que** ladite jante est telle que définie à l'une des revendications précédentes.

10. Ensemble monté (30) selon la revendication 9, **caractérisé en ce qu'**il est dépourvu de chambre à air et **en ce que** ledit pneumatique (20) comporte deux talons (21 et 22) respectivement montés sur lesdites portions latérales (15 et 16) dudit ruban (10).

11. Procédé d'assemblage d'un ensemble monté (30) selon la revendication 9 ou 10, **caractérisé en ce qu'**il comprend les étapes suivantes :
a) on applique le ruban autour de et en contact étroit avec la jante (1) de manière qu'il épouse le profil axial de la jante, de l'un desdits rebords de jante (5, 6) à l'autre (6, 5) en dépassant axialement desdits rebords de jante via lesdits tronçons périphériques (15a, 16a) rabattus radialement vers l'intérieur de ces rebords,
b) on serre la valve (11) montée à travers ce ruban sur la jante,
c) on monte les talons (21 et 22) du pneumatique (20) sur ledit ruban de préférence après avoir lubrifié la face externe de ce ruban et/ou ces talons,
d) on gonfle le pneumatique via ladite valve, puis
e) on détache ces tronçons périphériques desdites portions latérales respectives (15 et 16) les incorporant en deux emplacements axiaux qui sont fonction de la largeur axiale de la jante, de préférence en deux lignes circonférentielles de pré-découpe (17 et 18) respectivement formées en ces emplacements axiaux.

12. Procédé d'assemblage selon la revendication 11, **caractérisé en ce qu'**il comprend en outre une étape de positionnement de ladite valve (11) dans l'orifice dudit fond de jante (2) qui est destiné à la recevoir, cette étape de positionnement étant mise en oeuvre avant l'étape a) si la valve est préalablement montée solidaire du ruban (10), ou bien après l'étape a) et avant l'étape b) dans le cas contraire en montant cette valve à travers ladite portion centrale (12) du ruban et à travers cet orifice.

## Claims

1. Spoked wheel rim (1) for a wheeled vehicle, in particular for a bicycle, the rim having two rim flanges (5 and 6) and a rim bottom (2) covered with an annular ribbon (10) flexible and sealed against the inflation gas that is intended to receive a tire (20) and that is fitted with an inflation valve (11) for inflating this tire, this ribbon having a central portion (12) conforming to the shape of this rim bottom and two lateral portions (15 and 16) protruding axially from these rim flanges, **characterized in that** the said lateral portions are capable of having a portion of their axial width cut off by the detachment of two respective peripheral sections (15a and 16a) of these lateral portions, so that this ribbon extends from one of the said flanges to the other following this detachment.

2. Wheel rim (1) according to Claim 1, **characterized in that** the said lateral portions (15 and 16) each have circumferential precut lines (17 and 18) which are parallel and spaced in the axial direction, and which are capable of allowing the manual detachment of the said peripheral sections (15a and 16a) in axial locations determined as a function of the axial distance separating the said rim flanges (5 and 6) from one another.

3. Wheel rim (1) according to Claim 2, **characterized in that** the said precut lines (17 and 18) comprise a multitude of continuous striations in the circumferential direction.

4. Wheel rim (1) according to one of the preceding claims, **characterized in that** the said lateral portions (15 and 16) each have a radial thickness that is less than that of the said central portion (12), so as to make it easier to detach each peripheral section (15a, 16a).

5. Wheel rim (1) according to one of the preceding claims, **characterized in that** the said lateral portions (15 and 16) are connected to the said central portion (12) by two circumferential bulges (13 and 14) against which two beads (21 and 22) of the tire (20) are intended to be mounted.

6. Wheel rim (1) according to one of the preceding claims, **characterized in that** the said ribbon (10) consists of an elastomer material, preferably based on at least one thermoplastic vulcanizate (TPV).

7. Wheel rim (1) according to one of the preceding claims, **characterized in that** the said valve (11) is mounted secured to the said ribbon (10) by being for example welded, bonded or sleeve-fitted radially through this ribbon in the said central portion (12).

8. Wheel rim (1) according to one of the preceding claims, **characterized in that** each of the said rim flanges (5, 6) has a radially outer end (5b, 6b) which is curved back in the direction of the other flange (6, 5) and **in that**, before detachment of each peripheral section (15a, 16a), each lateral portion (15, 16) covers the said curved end (5b, 6b) both on the inner and outer faces of this end.

9. Mounted assembly (30) for a wheeled vehicle, in particular for a bicycle, having a wheel rim (1) intended to be traversed by spokes of the wheel and a tire (20) mounted on this rim, **characterized in that** the said rim is as defined in one of the preceding claims.

10. Mounted assembly (30) according to Claim 9, **characterized in that** it has no inner tube and **in that** the said tire (20) comprises two beads (21 and 22) respectively mounted on the said lateral portions (15 and 16) of the said ribbon (10).

11. Method for assembling a mounted assembly (30) according to Claim 9 or 10, **characterized in that** it comprises the following steps:
a) the ribbon is applied around and in close contact with the rim (1) so that it conforms to the axial profile of the rim, from one of the said rim flanges (5, 6) to the other (6, 5) while axially protruding from the said rim flanges via the said peripheral sections (15a, 16a) folded back radially towards the inside of these flanges,
b) the valve (11) mounted through this ribbon is clamped to the rim,
c) the beads (21 and 22) of the tire (20) are mounted onto the said ribbon preferably after having lubricated the outer face of this ribbon and/or these beads,
d) the tire is inflated via the said valve, and then
e) these peripheral sections of the said respective lateral portions (15 and 16) incorporating them are detached in two axial locations which are a function of the axial width of the rim, preferably in two precut circumferential lines (17 and 18) respectively formed in these axial locations.

12. Assembly method according to Claim 11, **characterized in that** it also comprises a step of positioning the said valve (11) in the orifice of the said rim bottom (2) which is designed to receive it, this positioning step being applied before the step a) if the valve is first mounted secured to the ribbon (10) or else after the step a) and before the step b) in the contrary case by mounting this valve through the said central portion (12) of the ribbon and through this orifice.

## Patentansprüche

1. Speichenradfelge (1) für ein Fahrzeug mit Rädern, insbesondere für ein Fahrrad, wobei die Felge zwei Felgenflanken (5 und 6) und einen Felgenboden (2) aufweist, der mit einem ringförmigen Band (10) bedeckt, das biegsam und gegenüber dem Aufblasgas dicht ist, das dazu bestimmt ist einen Reifen (20) aufzunehmen, und das mit einem Aufblasventil (11) von diesem Reifen ausgerüstet ist, wobei das Band einen mittleren Abschnitt (12), der sich an den Felgenboden anschmiegt, und zwei Seitenabschnitt (15 und 16) aufweist, die axial über die Felgenflanken hinausragen, **dadurch gekennzeichnet, dass** die Seitenabschnitte geeignet sind, um einen Teil ihrer Axialbreite durch Loslösung von zwei jeweiligen Umfangsabschnitten (15a und 16a) von den Seitenabschnitten in der Weise verkürzt zu sein, dass sich das Band im Anschluss an diese Loslösung von einer der Flanken zur anderen erstreckt.

2. Radfelge (1) nach Anspruch 1, **dadurch gekennzeichnet, dass** die Seitenabschnitte (15 und 16) jeweils Vorschneide-Umfangslinien (17 und 18) aufweisen, die parallel verlaufen und in Axialrichtung beabstandet sind und die geeignet sind, die manuelle Loslösung der Umfangsabschnitte (15a und 16a) an Axialstellen zu gestatten, die in Abhängigkeit von dem Axialabstand, der die Felgenflanken (5 und 6) voneinander trennt, bestimmt sind.

3. Radfelge (1) nach Anspruch 2, **dadurch gekennzeichnet, dass** die Vorschnittlinien (17 und 18) eine Vielzahl an Rillen bzw. Streifen aufweisen, die in der Umfangsrichtung durchgehend sind.

4. Radfelge (1) nach einem der vorhergehenden Ansprüche, **dadurch gekennzeichnet, dass** die Seitenabschnitte (15 und 16) jeweils eine Radialdicke haben, die geringer als die des mittleren Abschnitt (12) ist, damit die Loslösung von jedem Umfangsabschnitt (15a, 16a) erleichtert ist.

5. Radfelge (1) nach einem der vorhergehenden Ansprüche, **dadurch gekennzeichnet, dass** die Seitenabschnitte (15 und 16) mit dem mittleren Abschnitt (12) durch zwei Umfangswülste (13 und 14) verbunden sind, gegen die zwei Enden (21 und 22) des Reifens (20) montierbar sind.

6. Radfelge nach einem der vorhergehenden Ansprüche, **dadurch gekennzeichnet, dass** das Band (10) aus einem Elastomermaterial gebildet ist, vorzugsweise auf der Grundlage von zumindest einem thermoplastischen Vulkanisat (TPV).

7. Radfelge (1) nach einem der vorhergehenden Ansprüche, **dadurch gekennzeichnet, dass** das Ventil (11) mit dem Band (10) fest verbunden montiert ist, indem dieses beispielsweise radial durch dieses Band in den mittleren Abschnitt (12) geschweißt, geklebt oder eingepresst wird.

8. Radfelge (1) nach einem der vorhergehenden Ansprüche, **dadurch gekennzeichnet, dass** jede der Felgenflanken (5, 6) einen radial äußeren Endabschnitt (5b, 6b) aufweist, der in Richtung der anderen Flanke (6, 5) gekrümmt ist, und dass vor der Loslösung von jedem Umfangsabschnitt (15a, 16a) jeder Seitenabschnitt (15, 16) den gekrümmten Endabschnitt (5b, 6b) gleichzeitig an der Innen- und der Außenfläche von diesem Endabschnitt bedeckt.

9. Montierte Einheit (30) für ein Fahrzeug mit Rädern, insbesondere für ein Fahrrad, die eine Radfelge (1), die dazu bestimmt ist, dass durch diese Radspeichen gehen, und einen auf der Felge montierten Reifen (20) aufweist, **dadurch gekennzeichnet, dass** die Felge eine nach einem der vorhergehenden Ansprüche definiert ist.

10. Montierte Einheit (30) nach Anspruch 9, **dadurch gekennzeichnet, dass** diese ohne Luftkammer ist und dass der Reifen (20) zwei Enden (21 und 22) aufweist, die jeweils an den Seitenabschnitte (15 und 16) des Bandes (10) montiert sind.

11. Montageverfahren für eine montierte Einheit (30) nach Anspruch 9 oder 10, **dadurch gekennzeichnet, dass** dieses die folgenden Schritte aufweist:
a) Aufbringen des Bandes um die Felge (1) und in engen Kontakt mit dieser in der Weise, dass dieses sich an das Axialprofil der Felge anschmiegt, von einer der Felgenflanken (5, 6) zur anderen (6, 5), indem axial die Felgenflanken von Umfangsabschnitte (15a, 16a) überragt werden, die radial nach innen von diesen Flanken umgeschlagen sind,
b) Drücken des Ventil (11), das durch dieses Band hindurch montiert ist, auf die Felge,
c) Montieren der Enden (21 und 22) des Reifens (20) auf das Band vorzugsweise nach dem Schmieren der äußeren Fläche des Bandes und/oder der Enden,
d) Aufblasen des Reifen über das Ventil, dann
e) Loslösen der Umfangsabschnitte der jeweiligen Seitenabschnitte (15 und 16), die diese einschließen, an zwei axialen Stellen, die von der Axialbreite der Felge abhängen, vorzugsweise an zwei Vorschnitt-Umfangslinien (17 und 18), die jeweils an diesen axialen Stellen ausgebildet sind.

12. Montageverfahren nach Anspruch 11, **dadurch gekennzeichnet, dass** dieses ferner einen Schritt der Positionierung des Ventils (11) in der Öffnung des Felgenbodens (2) aufweist, der dazu bestimmt ist, dieses aufzunehmen, wobei dieser Schritt der Positionierung vor dem Schritt a) umgesetzt wird, wenn das Ventil zuvor mit dem Band (10) fest verbunden montiert ist, oder auch nach dem Schritt a) und vor dem Schritt b) im umgekehrten Fall umgesetzt wird, indem das Ventil durch den mittleren Abschnitt (12) des Bandes hindurch und durch die Öffnung hindurch montiert wird.
